(19) **Europäisches Patentamt**
**European Patent Office**
**Office européen des brevets**

(11) **EP 4 558 019 B1**

(12) **EUROPEAN PATENT SPECIFICATION**

(45) Date of publication and mention
of the grant of the patent:
**29.04.2026   Bulletin 2026/18**

(21) Application number: **23748853.1**

(22) Date of filing: **20.07.2023**

(51) International Patent Classification (IPC):
*A47J 31/44 (2006.01)*       *A47J 31/52 (2006.01)*

(52) Cooperative Patent Classification (CPC):
**A47J 31/4492; A47J 31/52**

(86) International application number:
**PCT/IB2023/057402**

(87) International publication number:
**WO 2024/018414 (25.01.2024 Gazette 2024/04)**

---

(54) **A CONTROL SYSTEM AND METHOD FOR A MACHINE FOR PREPARING AND DISPENSING HOT BEVERAGES BY CONTROLLED INFUSION OF A PRECURSOR SUBSTANCE IN GRANULAR OR POWDER FORM, BASED ON THE RECOGNITION AND CLASSIFICATION OF A DOSE UNIT INSERTED IN THE MACHINE**

EIN STEUERSYSTEM UND VERFAHREN FÜR EINE MASCHINE ZUR ZUBEREITUNG UND AUSGABE VON HEISSGETRÄNKEN DURCH KONTROLLIERTE INFUSION EINER SUBSTANZ IN GRANULAT- ODER PULVERFORM, BASIEREND AUF DER ERKENNUNG UND KLASSIFIZIERUNG EINER IN DIE MASCHINE EINGESETZTEN DOSIEREINHEIT

SYSTÈME ET PROCÉDÉ DE COMMANDE D'UNE MACHINE DE PRÉPARATION ET DE DISTRIBUTION DE BOISSONS CHAUDES PAR INFUSION CONTROLÉE D'UNE SUBSTANCE SOUS FORME DE GRANULAIRE OU DE POUDRE, BASÉE SUR LA RECONNAISSANCE ET LA CLASSIFICATION D'UNE UNITÉ SOUS FORME DE DOSE INSERÉE DANS LA MACHINE

---

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority:  **22.07.2022   IT 202200015462**

(43) Date of publication of application:
**28.05.2025   Bulletin 2025/22**

(73) Proprietor: **Luigi Lavazza S.p.A.**
**10152 Torino (IT)**

(72) Inventors:
• **LAFORTEZZA, Giuseppe**
  **10152 Torino (IT)**

• **ZAPPOLI, Andrea**
  **10152 Torino (IT)**
• **CARRACOI, Massimiliano**
  **10152 Torino (IT)**

(74) Representative: **Deambrogi, Edgardo et al**
**Jacobacci & Partners S.p.A.**
**Corso Emilia 8**
**10152 Torino (IT)**

(56) References cited:
**WO-A1-2017/134544       WO-A1-2019/154527**
**US-A1- 2019 231 147       US-A1- 2021 022 547**

---

**Description**

The present invention relates to machines for preparing and dispensing hot beverages by controlled infusion of a dose unit of a precursor substance containing one or more ingredients, for example coffee.

More specifically, the invention relates to a control system and method for a machine for preparing and dispensing hot beverages by controlled infusion of a precursor substance in granular or powder form, arranged in a dose unit, according to the preamble of claims 1 and 25, respectively.

Machines for preparing and dispensing hot beverages by controlled infusion of a dose unit are known which comprise means for automatically identifying the dose unit inserted into the machine, in order to classify said dose unit into one of a plurality of predetermined types or classes of dose units and consequently control at least one parameter or operating mode of infusion of the machine according to the type of dose unit recognized, or record and/or transmit machine usage data to a remote management system.

Automatic identification may be implemented with machine-learning techniques, for example through pattern recognition methods or artificial neural networks based on predefined classification schemes.

The utility model IT274555 of the same Applicant describes a machine for preparing beverages, in particular coffee, with the use of a pod or capsule selected from a plurality of types of pods or capsules having different features, in particular having the same dimensional features, but containing different substances or ingredients, the machine comprising a detector device adapted to detect at least one predetermined detectable feature or code identifying the type of pod or capsule inserted into the machine, and a processing and control unit to which said detector device is connected, which is arranged to implement an operating cycle of the machine which varies according to predetermined methods according to the type of pod inserted into the machine and recognized by the detector device, and/or to acquire data indicative of the methods of use of the machine by the user, such as the total quantity and/or the individual quantities of the various types of pods used in a given period of time, the possible use of "non-original" compatible pods, etc.

The detectable feature or code is for example a color, or a bar code, or a so-called RFID tag.

Automatic identification of the dose unit may also be implemented with machine-learning techniques, for example through pattern recognition methods or artificial neural networks based on predefined classification schemes, as taught by the international patent application WO 2019/154527.

WO 2019/154527 discloses a machine for preparing and dispensing a beverage, such as tea, coffee, hot chocolate, cold chocolate, milk, soup or baby food, comprising a module for recognizing a capsule inserted in said machine in a recognition position, comprising a camera for capturing an image of at least part of said capsule and a neural network computing device configured to determine the type of capsule among a plurality of predefined capsule types based on an image of at least part of said capsule captured by said camera.

Although a machine for preparing and dispensing a beverage of the type described above may guarantee the automatic recognition of a pod or capsule, it is not suitable for accurately recognizing and classifying objects that may change their features over time, such as coffee tablets or other precursor substances in granular or powder form, which are subject to deterioration due, for example, to the tablet storage conditions or exposure to non-optimal temperature or humidity environmental conditions, or their handling by a user.

Furthermore, even in the case of packaged dose units such as pods or capsules, the external surface of which is not perishable, the state of cleanliness of the image acquisition optics, which are located in proximity to the infusion chamber, or the wear of the illumination means of the dose units and the means for acquiring images during the life of the machine, especially if they are low-cost devices, may cause artifacts in the acquisition of the images of the dose units inserted in the machine, on which the automatic recognition process is conducted, leading to misclassification.

Further factors which influence the accuracy of the classification reside in the randomness of the spatial position of the dose unit inserted in the machine at the moment of acquisition of the image for recognition, in particular if this image is acquired in a transfer path of the dose unit to the infusion chamber, for example as a result of falling or by moving a housing compartment of the dose unit, in which the dose unit is not stationary.

The object of this invention is to provide a satisfactory solution to the problems described above, avoiding the drawbacks of the prior art.

More specifically, the object of the present invention is to provide a control system for a machine for preparing and dispensing a beverage based on an accurate and robust classification of the dose units of the beverage precursor substance fed to the machine, which classification is, as much as possible, independent of the conditions of the dose unit and the machine, during the entire operating life of the machine.

A further object of the invention is to make the classification of the dose units adaptable as the operating conditions of the machine vary or as the types of dose units which may be produced over time vary.

Another object of the invention is to provide a control system which may be made and integrated in a machine for preparing and dispensing a beverage in a cost-effective manner, for example for household machines of limited size and cost.

According to the present invention, these objects are achieved by a control system of a machine for preparing and dispensing hot beverages having the features set forth in claim 1.

Particular embodiments form the subject matter of the dependent claims, the content of which is to be understood as an integral part of the present description.

A further subject-matter of the invention is a method for controlling a machine for preparing and dispensing hot beverages having the features set forth in claim 25.

In summary, the present invention is based on the principle of carrying out automatic recognition of the dose units inserted into the machine through machine-learning classification techniques, preferably through a neural network or a similar determined classification model, where the classification is based on a set of training dose unit images representative of a plurality of predetermined types or classes of dose units in a plurality of conditions for acquiring images of said dose units. Specifically, the dose units comprise respective graphic recognition markings indicative of the dose unit classes, and the set of training images of dose unit comprises a plurality of primary (or original) images of dose unit samples pre-classified in a supervised manner and a plurality of synthetic images obtained by alteration of the plurality of primary images, according to a data augmentation technique, to take into account possible alterations in the actual samples of dose units or in the means and conditions of image acquisition of dose units during the operating life cycle of the machine, as well as to increase the amount of images for training.

Advantageously, the creation of a plurality of synthetic images makes it possible to simulate images of deteriorated dose units, artifact images of intact dose units, for example due to the deterioration of the acquisition means of said images or to non-optimal alignment of the dose unit with respect to the image acquisition means, or images of dose units different from the sample dose units, for example in the case of dose units for different beverages such as espresso or American coffee, which have different dimensions so that the acquired images may be susceptible to alteration due to optical distortion.

Advantageously, the graphic recognition markings indicative of the types of dose units comprise an inscription identifying the product line and additional denotation markings, allowing a first classification on the basis of the product line of the dose unit and a second classification on the basis of the mixture of the precursor material.

The term graphic markings refers to superficial (two-dimensional) graphic markings obtainable for example by printing or other application of an edible additional substance, hot marking or by applying a localized laser beam, which markings exhibit a different color from the color of the precursor substance of the dose unit, or a color contrasting with the color of the precursor substance, or in any case a luminous intensity or brightness different from the luminous intensity or brightness of the precursor substance in response to the illumination of the dose unit, or raised or notched (three-dimensional) graphic markings obtained by modifying the morphological properties of the surface of the precursor substance of the dose unit, for example by applying an edible additional substance or by mechanical and/or thermal impression on predetermined areas of the surface of the precursor substance adapted to form reliefs or engravings, which exhibit altered reflection properties and/or shadows when illuminated.

In one embodiment, the automatic recognition of the dose units may take place through the identification, in the acquired images, of the graphic recognition markings and the determination of a comparison index representative of the degree of similarity between the graphic recognition markings (or part of them) of the acquired image and the graphic recognition markings (or parts of them) of the training images of dose units or of a set of reference images of dose unit classes. The degree of similarity is defined by one or more comparison thresholds, which are preferably dynamically modifiable during the life cycle of the machine.

It is also possible to envisage that the automatic recognition of the dose units is implemented after a process of correcting the images acquired as a result of a deterioration of the classification accuracy or of the degree of similarity in comparisons between the graphic recognition markings of the image acquired and the graphic recognition markings of the training images of dose units or of a set of reference images of dose unit classes, or even on the basis of the elapsed operating time of the machine or of the number of dispensing actions performed. The image correction process may be implemented by applying predetermined correction models, or by updating the characteristic parameters, of the classification model according to instructions received from an external management system, which is temporarily connected to the machine control system through a local wired connection or a remote wireless connection.

Further features and advantages of the invention will be presented in greater detail in the following detailed description of an embodiment thereof, given by way of non-limiting example, with reference to the accompanying drawings, wherein:

Fig. 1 is a schematic representation, in sectional view, of a machine for preparing and dispensing hot beverages by infusion, according to the invention;

Figs. 2a-2c are exemplary representations of coffee dose units, in the form of tablets, bearing graphic recognition markings;

Fig. 3 is a block diagram of a control system for the machine of Fig. 1;

Fig. 4 is a block diagram of a neural network used by the system of Fig. 3;

Fig. 5 is an exemplary representation of the elements of the neural network of Fig. 4;

Fig. 6 is a representation of a plurality of synthetic images obtained by alteration of primary images of dose unit samples;

Fig. 7 is a representation of a plurality of additional synthetic images obtained by processing primary images of dose unit samples; and

Figs. 8a and 8b are flow charts of a training method and a control method of a machine for preparing and dispensing hot beverages by infusion according to the invention.

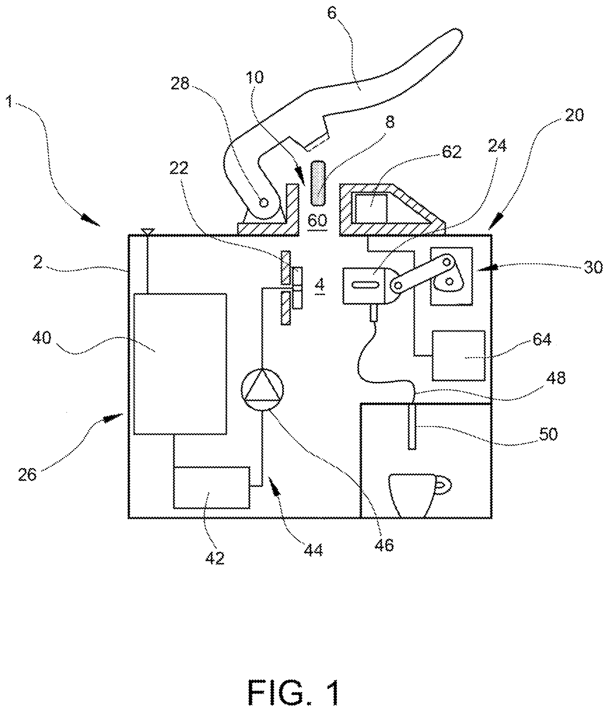

Referring to Fig. 1, a machine for preparing beverages, in particular coffee, from a compacted tablet containing one or more ingredients, in particular coffee powder, is denoted as a whole by 1.

Although the invention is described in reference to the use of a compacted tablet containing the ingredient, or ingredients, for the preparation of the beverage, it is not to be understood as limited to a dose unit in the form of a tablet, but it is also applicable in the case where, in place of a tablet, there is provided a dose of powder contained in a capsule, a pod or other similar package suitable for the preparation of beverages by infusion. For the purposes of the present invention, the term "precursor substance in granular or powder form" therefore contemplates both a product packaged in a rigid capsule or a flexible pod, and a compacted product in tablet form.

In the embodiment illustrated by way of example, the machine 1 comprises a machine body 2 with an operating region 4. The machine 1 has a lever 6 for pushing a dose unit 8 into the region 4 through an introduction opening 10, a closing device 20 operating on the dose unit 8 to enclose it in an infusion chamber delimited by two opposing cooperating elements 22, 24 (and possibly to pierce the coating film of the pod or the closure lid of the capsule), and a circulation system 26 to circulate a flow of hot water and/or pressurized steam through the dose unit in the infusion chamber.

The dose unit 8 contains a dose or portion of granular or powder material, of coffee or another substance intended for infusion to produce a hot beverage, in the form of a tablet having a self-supporting structure which does not require an outer casing, or packaged in a flexible water-permeable wrapper, typically a paper wrapper, usually referred to as a "pod", or in a more or less rigid capsule.

The lever 6 is rotatable around a fulcrum 28 and is adapted to push the dose unit 8 towards the operating region 4 through the opening 10.

In the illustrated example, the closing device 20 includes an abutment element 22, a thrust element 24, movable with respect to the abutment element 22, and a clamping unit 30 operating on the element 24 to move it along a sliding direction.

The element 24 comprises a cup-shaped body defining the infusion chamber adapted to receive the dose unit 8, in a manner known per se.

The circulation system 26 is also of an essentially known type and comprises a water tank 40, a boiler 42 and a hydraulic circuit 44 including a circulation pump 46 between the boiler 42 and an inlet duct of the abutment element 22. A duct 48 connects an outlet manifold of the movable thrust element 24 with a beverage dispensing nozzle 50.

The machine 1 also comprises a pre-chamber 60 for the dose unit 8 in transit between the introduction opening 10 and the operating region 4.

The machine 1 is intended for use with dose units preferably provided with one or more predetermined graphic recognition markings identifying the class to which each dose unit belongs, in particular the type of ingredients or substances contained and the type of beverage which they allow to be made, or the product line. These recognition markings are of the optically detectable type, visible on a reference surface of the dose unit, for example they comprise one or more images bearing a product denomination and denotation markings.

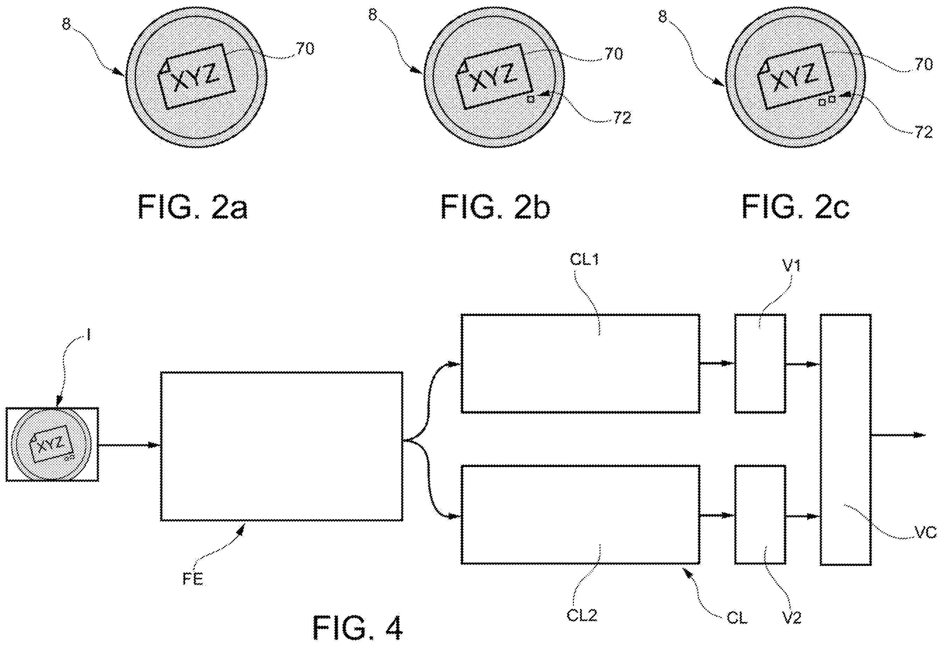

Figs. 2a-2c illustrate by way of example some possible solutions according to which such a dose unit 8, in the form of a tablet, may be provided with graphic recognition markings including (at least) one inscription on its external surface and denotation markings in association with it.

In particular, Fig. 2a, 2b and 2c show dose units 8 bearing an inscription 70, for example a cartouche identifying the product line, and zero, one or two denotation markings 72 associated therewith, respectively, in the case in the example formed by simple symbols (for example: circles, squares) affixed at a corner of the cartouche, identifying the mixture of the precursor material. In the case of coffee powder, the mixture of the precursor material has a brown color, of variable intensity depending on the composition of the mixture or its storage conditions, while the inscription and denotation markings produced by printing or other application of an edible additional substance, heat marking or by applying a localized laser beam or embossing/engraving are of a contrasting color, for example dark brown or black. Naturally, a similar recognition effect may be obtained by making graphic markings of a contrasting color lighter than the background color of the mixture of the precursor material or in any case having a luminous intensity or brightness different from the luminous intensity or brightness of the precursor substance in response to the illumination of the dose unit. In some embodiments, the visibility of the graphic markings by contrast against the background of the precursor material may show at illumination wavelengths or at observation (image acquisition) wavelengths different from the spectrum of wavelengths visible to the human eye.

Dose units 4 of this type may be advantageously used in a machine of the type illustrated in Fig. 1, where a detector device (reader) 62 is positioned along the path of the dose units between the introduction opening 10 and the operating region 4, for example on one side of the pre-chamber 60.

The machine 1 comprises an electronic processing and control unit 64 to which the code detector device 62 is connected and which is arranged to classify the dose unit and to implement an operating cycle of the machine for managing the dose unit, variable according to predetermined modes according to the class of the dose unit 8 introduced into the machine, whose image is acquired by means of the detector device 62, and/or to acquire data indicative of the modes of use of the machine 1 by the user, such as preferred types of beverages, etc.

The processing and control unit 64 may, for example, be arranged to vary, according to the type of dose unit and therefore of beverage, the duration of the infusion, and/or the quantity and/or the temperature and/or the pressure of water and/or steam passed through the dose unit.

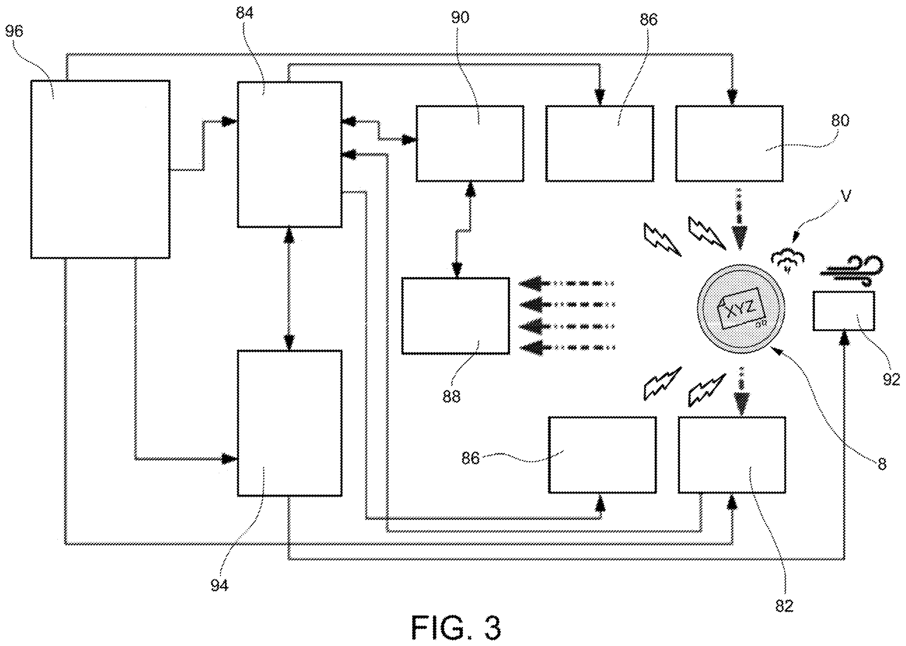

The control system for the machine of Fig. 1 is illustrated in more detail by the block diagram of Fig. 3.

The dose unit 8 is shown (in the pre-chamber 60) between a pair of devices 80 and 82 adapted to detect its presence, for example by interrupting an infrared signal transmitted by an emitter device 80 to a receiver device 82. An image recognition and classification microcontroller unit 84, in communication with the devices 80 and 82, presides over the detection of the introduction of a dose unit into the pre-chamber and is coupled to one or more illumination modules 86 adapted to at least temporarily illuminate the pre-chamber to allow the acquisition of at least one image of at least one reference surface of the dose unit. Conveniently, the illumination modules 86 may include means for regulating the intensity and/or color (or, more generally, the wavelength) of the particular illumination light beam.

In general, the illumination light beam may be in the visible spectrum, or in another spectrum, for example infrared or ultraviolet, in one or more selected wavelength bands, with predetermined, and also variable, illumination angles.

Reference numeral 88 indicates an image acquisition module, for example including an RGB camera or a CCD sensor with LED ring illumination, used for the acquisition of the aforementioned images of the dose unit under the control of the microcontroller unit 84, which is arranged to trigger the shooting of one or more images of the dose unit inserted into the machine during its transfer towards the infusion chamber by means of the control of the illumination modules, as well as to carry out the recognition and classification of the images. The microcontroller unit 84 is coupled to the image acquisition module 88 via an adapter module 90 adapted to transfer the image data to the microcontroller unit 84. The microcontroller unit 84 is programmed to classify the detected images according to the procedure which will be described below, governed by a classifier model, such as a neural network, in the form of a computer program stored in an associated permanent memory module, which is optionally rewritable as a result of a connection of the microcontroller unit with an update module, for example a wired connection with a local update module or a wireless connection, for example via a local or wide area communication network, with a remote update module, in order to update the classifier model to new classes of dose units or at different times of the operating life of the machine.

The image acquisition module 88 may operate in the visible spectrum, or in another spectrum, for example infrared or ultraviolet, in one or more selected wavelength bands, at at least one predetermined acquisition angle, which is not necessarily frontal, for example also variable.

The microcontroller unit 84 is arranged to communicate with separate control means of the machine (not shown) which are arranged to control at least one parameter or operating management mode of the dose unit, such as for example an infusion parameter or operating mode of the machine or a parameter or operating mode relating to other steps, for example for controlling the compression of the dose unit during a pre-infusion step and/or during an infusion step, according to constant profiles or defined according to predetermined control curves, of the squeezing of the dose unit after infusion to remove residual water, of the automatic removal of the dose unit after infusion from the infusion chamber to a collection compartment for spent units, depending on the recognized dose unit class, according to the related data transmitted by the adapter module 90, or for communicating with a remote management system arranged for recording machine usage data, for example for counting the number of dispensing actions for statistical purposes and predicting possible wear of the image acquisition means.

Advantageously, the results of the classification processes of the dose units gradually inserted into the machine during its operating life may be communicated over time to external management systems, temporarily associated via a local wired connection or a remote wireless connection, for example via a local or wide area communication network, from which the microcontroller unit may receive programming instructions, for example for updating the characteristic parameters of the classification model.

In a currently preferred embodiment, there are three images acquired for a dose unit inserted into the machine, and the microcontroller unit 84 selects the best image through a selection algorithm, for example a "voting" algorithm based on a voting strategy, such as majority voting Naive Bayes weighted majority voting.

In the pre-chamber, which communicates with the infusion chamber, there may be steam coming from the infusion chamber, represented in the image by the pictogram denoted as V, and the pre-chamber may therefore preferably be associated with fan means 92 for cleaning the detector device 62 integrated in the image acquisition and recognition module 88, for example for the suction of the steam or of the particles of precursor material in suspension produced by the previous infusion operations and the consequent cleaning of the optics of the image acquisition device, which fan means 92 are controlled by a respective electronic control module 94.

Finally, reference numeral 96 indicates a module for managing the electrical power supply to the system components.

Fig. 4 shows a currently preferred embodiment of the microcontroller unit 84, which operates as an electronic system for processing and automatic recognition of the dose units, of the machine-learning type, arranged (i.e., programmed) to receive as input at least one acquired image I of the dose unit and to classify said dose unit into one of a plurality of predetermined classes (or types) of dose units based on a set of training images of dose units, or classes of dose units taken in a learning step.

In the currently preferred embodiment, the microcontroller unit 84 includes a convolutional neural network configured to receive as input a set of values of a predetermined matrix of pixels of the acquired image I of dose units, representative of the gray levels or intensity of the color channels, such as for example the RGB channels, and more generally indicative of the luminous intensity or brilliance, i.e. the amount of light that the illuminated surface of the dose unit reflects or emits (for example by phosphorescence or fluorescence of the edible additional substance with which the graphic markings are made) at the acquisition wavelengths, the neural network comprising an input layer, a plurality of cascaded hidden layers, and an output layer adapted to provide a classification of the dose unit into one of a plurality of manufacturer classes, and into one of a plurality of product classes. More specifically, a first classification is intended to recognize the product line of the dose unit inserted into the machine on the basis of the marking 70, for example by distinguishing between graphic markings relating to dispensable product lines, similar markings or makings relating to non-dispensable product lines (depending on the type of dispensing machine model), and a second classification is intended to recognize the mixture of the precursor material on the basis of the denotation markings 72.

In detail, the neural network comprises a first subset FR of hidden feature extraction layers and a second subset CL of hidden classification layers. The subset FE of hidden feature extraction layers, having the purpose of extracting the salient features from the images useful for the classification purpose, comprises a plurality of hidden layers, each of which includes a series of convolutional blocks in residual configuration, configured to extract a series of feature maps from an acquired image of the dose unit by repeated application of predetermined filters whose values are defined in a learning step of the neural network, which will be discussed later in the present discussion, together with a reduction in the size of the data representative of the image of the dose unit. The subset CL of hidden classification layers comprises two parallel processing legs CL1, CL2 each having a plurality of fully connected layers, which output corresponding vectors V1, V2 indicative of the respective classification outcomes, which are then concatenated into a single output vector VC.

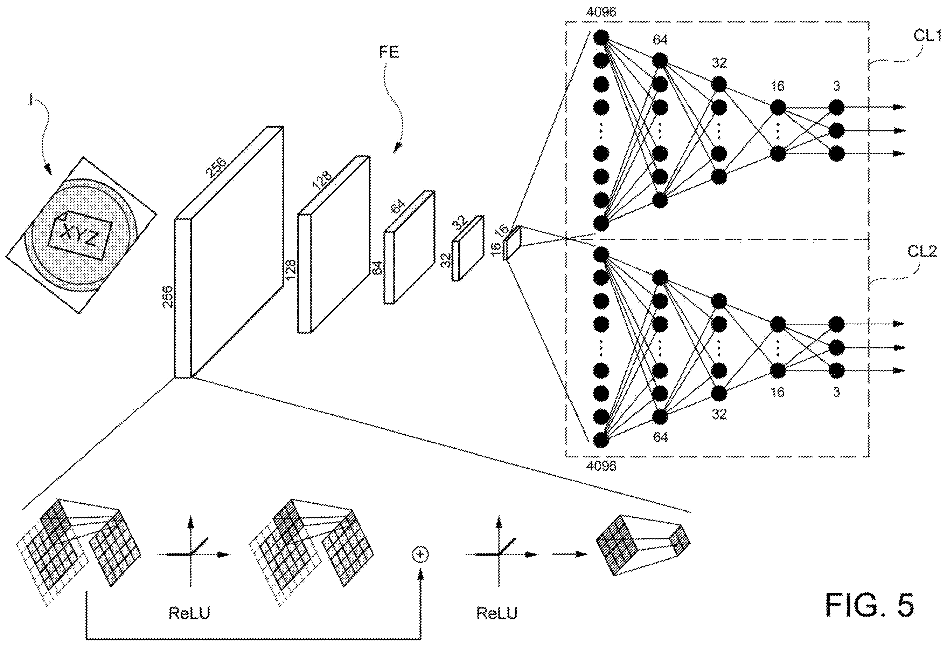

More specifically, with reference to the example of Fig. 5, the subset FE of feature extraction layers includes five layers, each of which, as represented in the enlarged insert of Fig. 5, is configured to apply a pair of convolutional filters to an input matrix and ReLU activation functions according to a residual configuration, as well as to apply a pooling operation to halve the size of the input matrix at the output. As an alternative to the pooling operation, convolutional filters may be applied with a stride other than 1. Advantageously, this configuration of the feature extraction layers allows the problem of the vanishing gradient in the supervised training of the network to be mitigated by error back-propagation. Furthermore, the application of convolutional filters is performed according to the depthwise separable convolution approach, to speed up training convergence.

The sizes of the layers may vary according to the processing resources available on the machine.

The first layer is adapted to receive an input matrix representing the pixel values of a predefined area of the original image, in the exemplary case a central area of size 256 x 256 pixels, which is subjected to convolution with 16 filters of size 3x3 and stride 1 and application of ReLU activation functions in residual configuration, and subsequently to a max pooling operation with stride 2, resulting in the output of a plurality of 16 feature maps of size 128 x 128.

The second layer is adapted to submit the 16 feature maps calculated at the first layer, of size 128 x 128 pixels, to convolution with 32 filters of size 3x3 and stride 1 and application of ReLU activation functions in residual configuration, and subsequently to a max pooling operation with stride 2, resulting in the output of a plurality of 32 feature maps of size 64 x 64.

The third layer is adapted to submit the 32 feature maps calculated at the second layer, of size 64 x 64 pixels, to convolution with 32 filters of size 3x3 and stride 1 and application of ReLU activation functions in residual configuration, and subsequently to a max pooling operation with stride 2, resulting in the output of a plurality of 32 feature maps of size 32 x 32.

The fourth layer is adapted to submit the 32 feature maps calculated at the third layer, of size 32 x 32 pixels, to convolution with 64 filters of size 3x3 and stride 1 and application of ReLU activation functions in residual configuration, and subsequently to a max pooling operation with stride 2, resulting in the output of a plurality of 64 feature maps of size 16 x 16.

Finally, the fifth layer is adapted to submit the 64 feature maps calculated at the fourth layer, of size 16 x 16 pixels, to convolution with 64 filters of size 3x3 and stride 1 and application of ReLU activation functions in residual configuration, and subsequently to a max pooling operation with stride 2, resulting in the output of a plurality of 64 feature maps of size 8 x 8.

Through a linearization operation (flattening), the pixel values of the 64 feature maps of size 8 x 8 are concatenated into a vector of size 4096, which is supplied as input to each leg CL1, CL2 of the subset CL of classification layers.

The subset of classification layers includes four layers for each processing leg, each of which is configured to perform a weighted linear combination of the input values and apply a relevant activation function, preferably a non-linear activation function, for example a ReLU function in the inner layers and a sigmoid or softmax function in the output layer.

The first layer is adapted to receive the input vector of size 4096, output by the subset of feature extraction layers, which is subjected to a non-linear weighted sum, resulting in an output vector of size 64.

The second layer is adapted to receive the vector calculated in the first layer of size 64, which is subjected to a non-linear weighted sum, resulting in an output vector of size 32.

The third layer is adapted to receive the vector calculated in the second layer of size 32, which is subjected to a non-linear weighted sum, resulting in an output vector of size 16.

Finally, the fourth layer is adapted to receive the vector calculated in the third layer of size 16, which is subjected to a non-linear weighted sum, resulting in an output vector of size 3, which represents the final result of the classification, which is preferably subjected to normalization using a softmax function to be expressed in terms of the probability that the dose unit belongs to each of the predefined classes.

The foregoing has been set out purely by way of example and it is to be understood that different convolutional network configurations, for example in the number of hidden layers, different filtering and pooling parameters, or different activation functions may be used. Further, that described above with reference to an input matrix representative of pixel values of a predefined area of the original image, applicable to a grayscale image in which each pixel has a grayscale level value, is extendable to color images by making appropriate reference to a plurality of input matrices representing the pixel values of a predefined area of the original image in the color channels, for example in the three RGB color channels.

The described neural network is trained in a supervised manner for the determination of the values of the convolutional filters and of the parameters of the activation functions of the subsets of hidden layers starting from a data collection comprising a plurality of images of dose units representative of all the different classifications required by the system, acquired by one or more training image acquisition modules, similar to the image acquisition module provided on board the machine, each of which has been preliminarily assigned at least one relative class, in the specific case the class indicative of the product line and the class indicative of the mixture of the precursor material. Preferably, the preliminarily classified dataset is divided into a first test dataset, comprising 20% of the dataset, a second training dataset, comprising 80% of the residual dataset, and a third validation dataset, comprising the remaining 20% of the residual dataset. The validation is for example carried out at each cycle by exchanging the validation data with the training data according to a cross-validation procedure with 5 partitions (k-fold cross validation, k = 5). Advantageously, the data of the test, training and validation datasets may be selected from the data collection manually or automatically, respecting as far as possible the percentage subdivision referred to above for each known class.

Conveniently, the data collection may include samples of different colors and different sizes (thicknesses), if any.

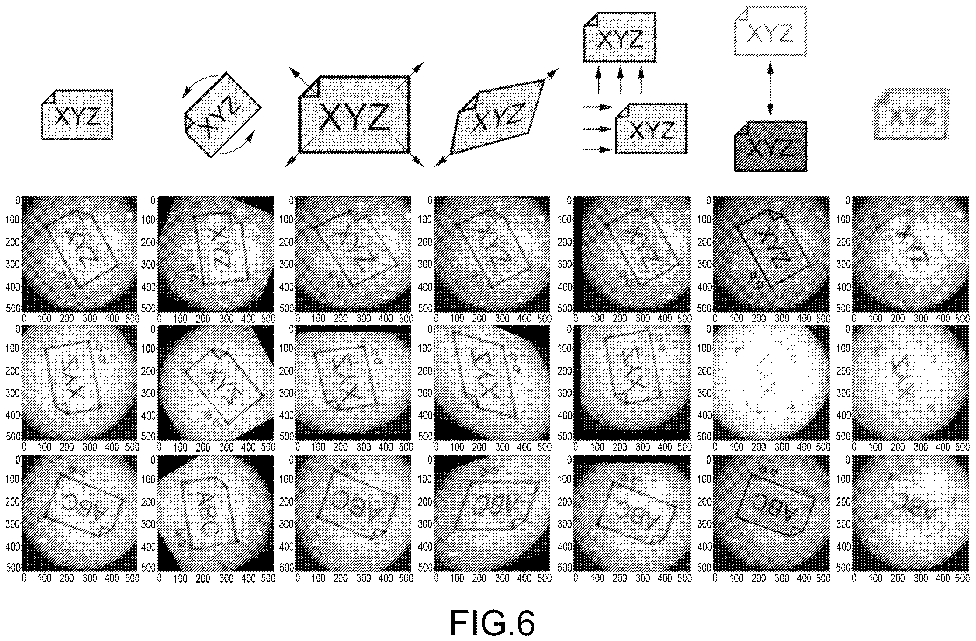

The plurality of dose unit images representative of all the different classifications required of the system, constituting the data collection, comprises at least a plurality of primary images of dose units acquired by one or more training image acquisition modules starting from available samples of dose units, and a plurality of synthetic images obtained by altering said plurality of primary images according to a data augmentation technique. The plurality of synthetic images includes respective graphic recognition markings altered with respect to the predetermined graphic recognition markings or with respect to the reference surface of the dose unit bearing said predetermined graphic recognition markings, represented by way of example in Fig. 6. The alteration of the graphic recognition markings may be obtained by altering only said graphic markings with respect to the reference surface of the dose unit or by overall alteration of the images. In particular, the altered graphic recognition markings have altered morphological, dimensional, positional or optical properties with respect to the predetermined graphic recognition markings, and more specifically the altered graphic recognition markings include by way of example at least one of the predetermined graphic recognition markings translated, rotated, in a reduced scale or in an enlarged scale, distorted, incomplete, blurred, with altered light intensity or brightness, with altered color or with altered contrast.

The use of synthetic images with altered graphic recognition markings advantageously allows broader training of the neural network to be conducted and greater generalization to be provided to the neural network, even in the case of acquiring images with features altered with respect to the primary images acquired starting from available samples of dose units.

In particular:

- the generation of synthetic images having graphic recognition markings translated vertically or horizontally, for example by 0.05% with respect to a primary reference image, allows the neural network to be strengthened, making the classification invariant with respect to the position of the dose unit in the pre-chamber 60;

- the generation of synthetic images having rotated graphic recognition markings, for example at a variable angle between -180° and +180° with respect to a primary reference image, allows the neural network to be strengthened, making the classification invariant with respect to the rotation of the dose unit in the pre-chamber 60;

- the generation of synthetic images having graphic recognition markings at a reduced or increased scale, for example at a variable scale between -0.10% and +0.10% with respect to a primary reference image, allows the neural network to be strengthened, making the classification invariant with respect to the axial position of the dose unit in the pre-chamber 60;

- the generation of synthetic images having distorted graphic recognition markings, for example at a variable pitch between -0.10px and +0.10px with respect to a primary reference image, allows the neural network to be strengthened, making the classification invariant with respect to acquisition speed of the image of the dose unit (or at the rate of fall of the dose unit) in the pre-chamber 60;

- the generation of synthetic images having incomplete graphic recognition markings, for example due to the absence of some portions with respect to a primary reference image within a predetermined incompleteness limit threshold, allows the neural network to be strengthened, making the classification invariant with respect to the completeness of the graphic marking and therefore more robust in the case of abrasions to the reference surface of the dose unit bearing the graphic marking, which cause the partial cancellation thereof;

- the generation of synthetic images having blurred graphic recognition markings with respect to a primary reference image allows the neural network to be strengthened, making the classification invariant with respect to the focusing of the dose unit in the pre-chamber 60;

- the generation of synthetic images having graphic recognition markings with an altered light intensity or brightness, respectively lighter or darker, for example in a brightness range between 0.35% and 1.25% with respect to a primary reference image, allows the neural network to be strengthened, making the classification invariant with respect to the color and reflectance of the dose unit in the pre-chamber 60, which may depend on the storage conditions of the tablet, on its state of deterioration (for example due to exposure to environmental conditions of non-optimal temperature or humidity) or even on the state of deterioration and cleanliness of the illumination means of the pre-chamber and of the image acquisition optics;

- the generation of synthetic images having graphic recognition markings with an altered color, for example in which the color of the graphic marking is lighter than the color of the background, with respect to a primary "dual" reference image in which the color of the graphic marking is darker than the color of the background, allows the neural network to be strengthened, making the classification invariant with respect to the color and the reflectance of the dose unit in the pre-chamber 60, which may depend on the manufacturing technique of the graphic recognition marking;

- the generation of synthetic images having graphic recognition markings with altered contrast, respectively lighter or darker than a predetermined reference contrast between the graphic marking and the reference surface of the dose unit in a primary reference image, allows the neural network to be strengthened, making the classification invariant with respect to the color and reflectance of the graphic marking of the dose unit, which may depend on the storage conditions of the tablet, its state of deterioration or the manufacturing technique of the reference graphic marking.

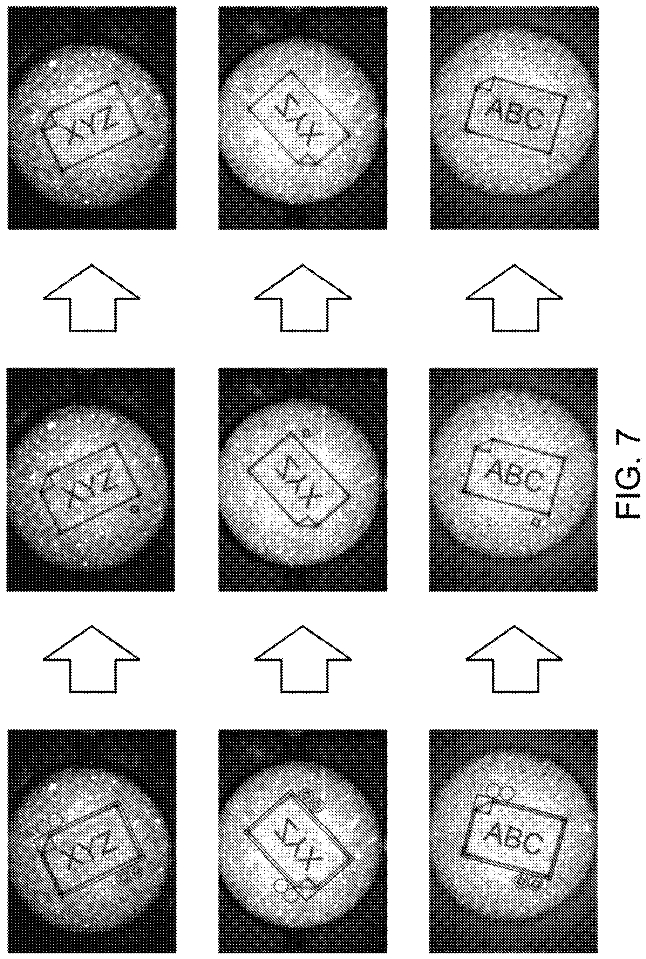

If the samples of dose units of the data collection do not have a sufficiently large population representative of a predetermined class, it is also possible to prepare a plurality of additional synthetic images obtained by manipulating the graphic recognition markings of the plurality of primary images or the primary images themselves with the aim of generating images that do not belong to the same class as the original image, for example by changing the number of denotation markings 72 associated with the inscription 70, as shown in Fig. 7. This may occur, by way of example, by applying pattern recognition techniques to an image of a dose unit in order to identify the inscription 70 and locate the associated denotation markings 72 (in the rectangular and circular survey areas shown in superimposition on the images of the left column), and image overwriting techniques in order to fully or partially remove the localized denotation markings 72 (central and right column).

Advantageously, it is possible to provide that the supervised training also includes acquisition of images of a dose unit without recognition markings (with features similar to the dose units to be recognized, i.e. with a background reference surface of said dose unit consistent in color and textures, or with different features, i.e. with a background reference surface of said dose unit that is not consistent) or images in the absence of dose units.

The supervised training of the neural network, on the basis of the data collection comprising primary images and synthetic images, is conducted, for example, by applying well-known error back-propagation algorithms, for example the Adam optimization algorithm for 300 cycles (epochs) of feeding the training dataset and updating the network parameters at each group of 32 images (batch size), with a learning rate of 0.01 with a decay factor of 0.5, patience of 10 epochs, minimum learning rate equal to 0.0000002 and label smooth equal to 0.2.

The supervised training of the neural network may adopt any known algorithm for minimization of the error function, such as a Categorical CrossEntropy error function.

Preferably, the subset of feature extraction layers may be provided with at least one embedding layer to optimize the classification by switching to a supervised mode in which, in addition to the above, a "Triplet Loss" technique is employed for supervision of the space of the features output from the feature extraction subset, in order to correct the distance in the reference space of the features between reference samples, samples to be recognized as "positive", i.e. of the same class, and samples to be rejected as "negative", i.e. of a different class, and to separate samples very similar to those to be recognized that may be confused with unsupervised training.

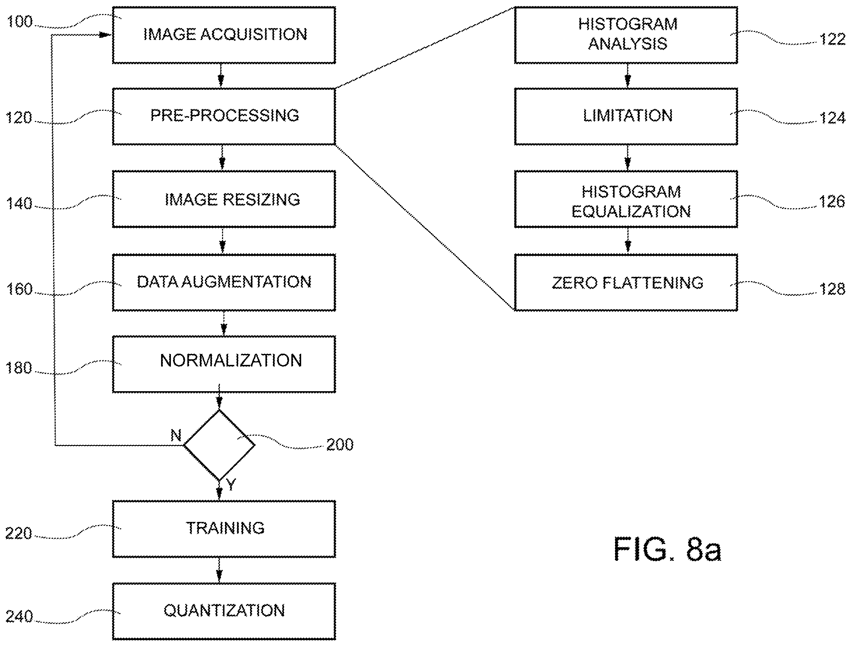

Fig. 8a shows a flow chart of the operations of an initialization process of a machine for preparing and dispensing hot beverages by infusion.

Specifically, at step 100 the acquisition of a primary image of a dose unit inserted in the machine, intended for a collection of training data, takes place, and at step 120 a pre-processing of the acquired image is performed, adapted to improve the contrast thereof, without distorting the pixel value. During the pre-processing, the acquired image is for example subjected to an analysis of the histogram and Otsu thresholding at step 122, which is particularly suitable for bimodal images, i.e. for images having histograms with a clear separation between two main peaks, which happens - with reference for example to the acquisition of images in the visible wavelength range - in the case of brown dose units, in which there are possibly graphic recognition markings that are in contrast, i.e. darker or lighter than the background of the mixture of the precursor material, for example due to the effect of black or white graphic traces on a brown background or due to the effect of concave or convex surface areas, or of engravings or reliefs, respectively dark or shiny with respect to the surrounding surface of the dose unit. Subsequently, an upper limitation of the pixel values of the image (clipping) is performed at step 124, then an equalization of the image histogram with background suppression is performed at step 126, and finally a zero flattening operation is performed at step 128, to minimize the effect of induced depth due to the image illumination and acquisition (except for the case in which the graphic markings include reliefs and/or engravings).

The above may be indifferently applied to a monochromatic image in gray tones, or to color images, by separating the application of normalization or equalization in the three channels.

At the next step 140, a transformation of the image is carried out in the format and dimensions acceptable by the neural network. In fact, to ensure high performance of the system in the classification of the dose units inserted in the machine, it is important to supply the neural network for feature extraction and classification with images that have the same size features as the images used in the neural network training step. For this, a scaling of the scanned image is preferably carried out. The acquired image is for example a 640x480 pixel image, and it is reduced to a 256x256 pixel image through a first cropping operation to select the central area of 480x480 pixel size of the original image, and a second bilinear interpolation operation to transform the cropped image into a useful image of 256x256 size, or in any case of a predetermined size based on the quantity of pixel values intended to be processed in the neural network, taking into account the balancing of opposing computational needs, i.e. memory saving and computational speed, and recognition efficiency needs.

At step 160, the data augmentation technique is applied to obtain synthetic images from the primary image, and at step 180, a normalization or standardization procedure of the image is applied to the primary image and to the synthetic images, comprising the subtraction from the image of its mean value and then the division by its standard deviation. In an alternative embodiment, the image pre-processing described at step 120 may also be performed on the synthetic images, subsequently to step 160.

Then, at step 200, the completion of the acquisition of the training data collection is verified and, if so, the previously described training of the neural network is performed, herein referred to collectively as step 220.

Following the training of the network, a quantization of the neural network model is performed at step 240, by approximating the floating point values to integer values, for example 8-bit integer values, based on a predetermined zero value and a predetermined scale factor, according to the formula:

$$\text{real value} = (\text{int value - zero point})*\text{scale}$$

The quantization operation allows a more compact representation of the neural network model to be obtained and neural network calculations to be performed with less memory occupation than would be required for calculations with floating point precision, reducing the space occupied by the neural network and the classification time.

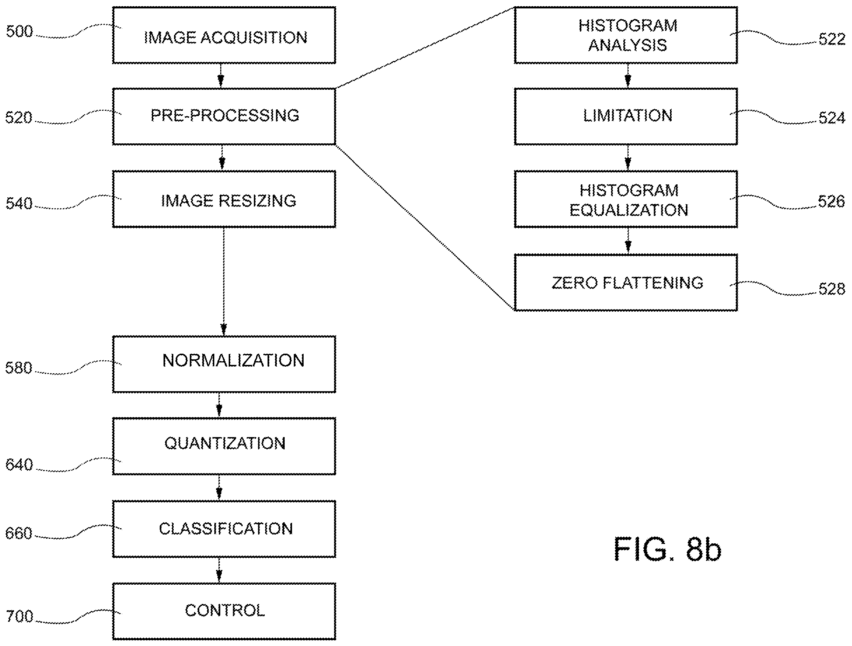

Fig. 8b shows a flow chart of the operations of a control or management process of a machine for preparing and dispensing hot beverages by infusion.

Specifically, at step 500 the acquisition of an image of a dose unit inserted in the machine is performed, and at step 520 a pre-processing of the acquired image is performed, adapted to improve the contrast thereof, without distorting the pixel value. During the pre-processing, the acquired image is subjected to the processing applied to the training images of the neural network, in particular an analysis of the histogram and Otsu thresholding at step 522, an upper limitation of the pixel values of the image (clipping) at step 524, an equalization of the image histogram with background suppression at step 526, and finally a zero flattening operation at step 528.

At the next step 540, a transformation of the image is carried out in the format and dimensions acceptable by the neural network, for example as described above by resizing the image acquired with 640x480 pixels into an image of 256x256 pixels through a first cropping operation by selection of the central area of 480x480 pixel size and a second bilinear interpolation operation for transforming the cropped image into a useful image of 256x256 size.

At step 580, a normalization or standardization procedure of the image is applied, comprising the subtraction from the image of its mean value and then the division by its standard deviation.

Then, at step 640, a quantization of the image is performed by approximating the floating point values obtained by normalizing or equalizing the image to integer values, e.g. 8-bit integer values, based on a predetermined zero value and a predetermined scale factor, according to the formula:

$$\text{real value} = (\text{int value - zero point})*\text{scale}$$

Then, at step 660, the classification of the image by the neural network takes place and an inverse operation to the quantization, by applying the formula recalled above, is carried out at the end of the classification to obtain the correct distribution of probabilities of the various classes.

Advantageously, the previously described neural network configuration and the processing of the input data thereof allow an image recognition and classification process to be executed with reduced memory resources (of the order of 1-2 Mbytes), such as are typically available on board a machine for preparing and dispensing hot beverages for household use.

Finally, at step 700, at least one of the following operations based on the knowledge of the class of the dose unit introduced in the machine is performed:

- control of at least one parameter or operating management mode of the dose unit such as for example a parameter or operating mode of infusion of the machine or a parameter or operating mode relating to other steps, for example for the control of the compression of the dose unit during a pre-infusion step and/or during an infusion step, according to constant profiles or defined according to predetermined control curves, of the squeezing of the dose unit after infusion to eliminate residual water, of the automatic removal of the dose unit after infusion, from the infusion chamber to a collection compartment for spent units;

- recording and/or transmission of machine usage data indicating the class of the recognized dose unit for statistical monitoring purposes, for example for the benefit of a remote telemetry system.

It should be noted that the proposed embodiment of this invention in the foregoing discussion is provided merely by way of example and not in limitation of the present invention. A person skilled in the art may easily implement the present invention in different embodiments which do not depart from the general principles outlined herein and are therefore included within the scope of protection of the invention defined by the appended claims. This applies in particular with regard to the possibility of acquiring moving images, i.e. a sequence of images (film) of the dose unit, for example in different spatial positions along a transfer path to the infusion chamber, which represents a dimensional extension of the case described above, whereby the image recognition unit includes a neural network adapted with respect to the previously described one to receive said sequence of images as input and carry out the classification of the dose unit on the basis of the sequence of images. In one embodiment, the neural network is arranged to act separately on the single images, applying a "voting" procedure to select the most probable classification. In an alternative embodiment, the neural network is arranged to act on a shooting video file of at least part of the transfer movement of the dose unit, for example comprising frames in which the dose unit is shot in its entirety by a wide-angle camera, whereby the neural network includes a matrix stack equal to the number of video frames in the case of an uncompressed file, or is adapted to classify a compressed file including one or more reference frames (fully described images) and predictive frames including respective partial information representative only of the variations with respect to the corresponding reference image.

Of course, without prejudice to the principle of the invention, the embodiments and the details of execution may vary widely with respect to that which has been described and illustrated purely by way of non-limiting example, without thereby departing from the scope of protection of the invention defined by the appended claims.

## Claims

1. A control system for a machine (1) for preparing and dispensing hot beverages by controlled infusion of a precursor substance in granular or powder form arranged in a dose unit (8), comprising:

- image acquisition means (62; 88) adapted to acquire at least one image (I) of said dose unit (8), or of a selected part thereof, inserted in the machine (1);

- electronic means (84) for processing and automatic recognition of said dose unit (8), of the machine-learning type, arranged to receive as input said at least one acquired image (I) of said dose unit (8), and to classify said dose unit (8) into one of a plurality of predetermined classes of dose units based on a set of training images of dose units taken in a learning step; and

- machine control means (64) coupled to said electronic means (84) for processing and automatic recognition, arranged to control at least one parameter or operating mode for management of the dose unit (8) depending on the recognized class of dose unit or to record and transmit to a remote management system a data item of usage of the machine (1) indicative of the recognized class of dose unit (8),

**characterized in that** said set of training images of dose units comprises at least a plurality of primary images of dose units (8) including respective predetermined graphic recognition markings (70, 72) on a reference surface of said dose unit (8), indicative of corresponding classes of dose units, and a plurality of synthetic images obtained by alteration of said plurality of primary images.

2. Control system according to claim 1, wherein said plurality of synthetic images includes respective graphic recognition markings altered with respect to said predetermined graphic recognition markings (70, 72) or with respect to the reference surface of the dose unit (8).

3. Control system according to claim 2, wherein said altered graphic recognition markings exhibit morphological, dimensional, positional or optical properties altered with respect to said predetermined graphic recognition markings (70, 72).

4. Control system according to claim 3, wherein said altered graphic recognition markings include at least one of said predetermined graphic recognition markings translated, rotated, in a reduced scale or in an enlarged scale, distorted, incomplete, blurred, with altered light intensity or brightness, with altered color or with altered contrast.

5. Control system according to any one of the preceding claims, wherein said electronic means (84) for processing and automatic recognition of said dose unit (8), of the machine-learning type, include a convolutional neural network configured to receive as input a set of values of a predetermined matrix of pixels of said acquired image (I), said convolutional neural network comprising an input layer, a plurality of cascaded hidden layers, and an output layer, wherein said plurality of cascaded hidden layers comprises a first subset (FE) of feature extraction layers and a second subset (CL) of classification layers.

6. Control system according to claim 5, wherein said subset (FE) of feature extraction layers comprises a plurality of layers, each of which is configured to extract a plurality of feature maps from an image (I) of the dose unit (8) by repeated application of predetermined filters, the values of which are defined in a learning step of the neural network, and to reduce the data size of said feature maps representative of the matrix of pixels of the acquired image (I).

7. Control system according to claim 6, wherein said plurality of layers of the subset (FE) of hidden feature extraction layers includes five layers, each of which includes a pair of convolutional filters intended to be applied to an input pixel matrix or an input feature map, and respective ReLU activation functions according to a residual configuration at the output, said convolutional filters or a subsequent pooling stage being configured to halve the size of the input feature map.

8. Control system according to claim 5, wherein said subset (CL) of classification layers comprises two parallel processing legs (CL1, CL2) each having a plurality of fully connected layers, each of which is adapted to receive as input a data array including the pixel values of the plurality of feature maps output from the subset (FE) of feature extraction layers.

9. Control system according to claim 8, wherein said plurality of fully connected layers of the subset (CL) of classification layers includes four layers, each of which is configured to perform a weighted linear combination of the input values and apply a relevant activation function, preferably a non-linear activation function.

10. Control system according to any one of claims 5 to 9, wherein said electronic means (84) for processing and automatic recognition are arranged to communicate with a remote management system temporarily connected to the control system via a local or remote connection, said connection being a wired or wireless connection, to transmit the classification result or to receive programming instructions of the parameters of said neural network.

11. Control system according to any one of the preceding claims, comprising triggering means (80, 82) coupled to said image acquisition means (62; 88), adapted to detect the insertion or passage of a dose unit (8) into a relevant recognition seat (60) and arranged to trigger the acquisition of said at least one image (I) of the dose unit (8) or of a selected part thereof located in the recognition seat (60).

12. Control system according to claim 11, further comprising illumination means (86) adapted to direct an illumination light beam towards said recognition seat (60).

13. Control system according to claim 12, wherein said illumination light beam is emitted in one or more selected wavelength bands comprising at least one wavelength band in the visible, infrared or ultraviolet spectrum.

14. Control system according to claim 13, including means for adjusting the intensity and/or wavelength of said illumination light beam, associated with said illumination means (86).

15. Control system according to claim 12, wherein said illumination means (86) are configured to operate at at least one predetermined variable acquisition angle.

16. Control system according to any one of the preceding claims, wherein said electronic means (84) for processing and automatic recognition of said dose unit (8) are arranged to implement a process of correcting an acquired image (I) by applying predetermined correction models for correcting the acquired images according to instructions received from a remote management system, temporarily connected to the control system via a local or remote connection, said connection being a wired or wireless connection.

17. Control system according to any one of the preceding claims, wherein said electronic means (84) for processing and automatic recognition of said dose unit (8) are arranged to identify, in said at least one acquired image (I), said predefined graphic recognition markings (70, 72), and to generate a comparison index representative of the degree of similarity between said at least one acquired image and said reference images.

18. Control system according to claim 17, wherein said degree of similarity is defined by a dynamically modifiable threshold.

19. Control system according to any one of the preceding claims, wherein said parameter or said operating mode for management of the dose unit (8) includes at least one infusion parameter or operating mode comprising at least one of temperature, pressure and amount of an infusion liquid.

20. Control system according to any one of the preceding claims, wherein said parameter or operating mode for management of the dose unit (8) includes at least one parameter or operating mode for controlling compression of the dose unit (8) during a preinfusion step and/or during an infusion step, squeezing of the dose unit (8) after infusion to remove residual water, or automatic removal of the dose unit (8) after infusion, from an infusion chamber (4) to a collection compartment for spent units.

21. Control system according to any one of the preceding claims, wherein said graphic recognition markings (70, 72) comprise at least one of surface graphic markings, which exhibit a color different from the color of the precursor substance of the dose unit, and raised or notched graphic markings.

22. Control system according to any one of the preceding claims, wherein said image acquisition means (62; 88) are configured to operate in one or more selected wavelength bands comprising at least one wavelength band in the visible, infrared or ultraviolet spectrum.

23. Control system according to any one of the preceding claims, wherein said image acquisition means (62; 88) are configured to operate at at least one predetermined variable acquisition angle.

24. Control system according to any one of the preceding claims, wherein said image acquisition means (62; 88) are configured to acquire sequences of images (I) of the dose unit (8) at different spatial positions along a transfer path of the dose unit (8) to an infusion chamber (4).

25. A control method for a machine (1) for preparing and dispensing hot beverages by controlled infusion of a precursor substance in granular or powder form arranged in a dose unit (8), wherein said machine (1) includes a control system according to any one of claims 1 to 24 which comprises:

     - electronic means (84) for processing and automatic recognition of a dose unit (8), of the machine-learning type, arranged to receive as input at least one image (I) of said dose unit (8) or a selected part thereof, and to classify said dose unit (8) into one of a plurality of predetermined classes of dose units; and
     - control means (64) for managing the dose unit (8), arranged to control at least one parameter or operating mode for management of the dose unit (8),

the method being **characterized in that** it comprises the steps of:

- in a learning step, configuring said electronic means (84) for processing and automatic recognition by a set of training images of dose units, comprising at least a plurality of primary images of dose units including respective predetermined graphic recognition markings (70, 72) on a reference surface of said dose unit (8) and representative of corresponding classes of dose units, and a plurality of synthetic images obtained by alteration of said plurality of primary images; and
- in an operating step,

acquiring at least one image (I) of a dose unit (8) of said precursor substance, or of a selected part thereof, inserted into the machine (1);

providing said at least one acquired image (I) of said dose unit (8) as input to said electronic means (84) for processing and automatic recognition;

classifying said dose unit (8) into one of a plurality of predetermined classes of dose units by said electronic means (84) for processing and automatic recognition; and

at least one step among:

- controlling at least one parameter or operating mode for management of the dose unit (8) depending on the class of said dose unit; and
- recording and/or transmitting to a remote management system a data item of usage of the machine (1) indicative of the class of the dose unit (8) for statistical monitoring purposes.

26. A computer program or group of programs executable by a control system according to any one of claims 1 to 24, comprising one or more code modules for implementing a control method for a machine (1) for preparing and dispensing hot beverages by controlled infusion of a precursor substance in granular or powder form according to claim 25.

**Patentansprüche**

1. Steuersystem für eine Maschine (1) zur Zubereitung und Ausgabe von Heissgetränken durch kontrollierte Infusion einer Vorläufersubstanz in Granulat- oder Pulverform, die in einer Dosiereinheit (8) angeordnet ist, umfassend:

- Bilderfassungsmittel (62; 88), die geeignet sind, mindestens ein Bild (I) der Dosiereinheit (8) oder eines ausgewählten Teils davon zu erfassen, die in die Maschine (1) eingesetzt ist;
- elektronische Mittel (84) zur Verarbeitung und automatischen Erkennung der Dosiereinheit (8), vom Typ des maschinellen Lernens, die eingerichtet sind, das mindestens eine erfasste Bild (I) der Dosiereinheit (8) als Eingabe zu empfangen und die Dosiereinheit (8) in eine einer Mehrzahl von vorbestimmten Klassen von Dosiereinheiten basierend auf einem Satz von Trainingsbildern von Dosiereinheiten zu klassifizieren, die in einem Lernschritt aufgenommen wurden; und
- Maschinensteuermittel (64), die mit den elektronischen Mitteln (84) zur Verarbeitung und automatischen Erkennung gekoppelt sind und eingerichtet sind, mindestens einen Parameter oder Betriebsmodus zur Verwaltung der Dosiereinheit (8) in Abhängigkeit von der erkannten Klasse der Dosiereinheit zu steuern oder ein Datenelement der Nutzung der Maschine (1), das die erkannte Klasse der Dosiereinheit (8) angibt, aufzuzeichnen und an ein Fernverwaltungssystem zu übertragen,

**dadurch gekennzeichnet, dass** der Satz von Trainingsbildern von Dosiereinheiten mindestens eine Mehrzahl von Primärbildern von Dosiereinheiten (8) umfasst, die jeweilige vorbestimmte grafische Erkennungsmarkierungen (70, 72) auf einer Referenzoberfläche der Dosiereinheit (8) enthalten, die entsprechende Klassen von Dosiereinheiten anzeigen, sowie eine Mehrzahl von synthetischen Bildern, die durch Veränderung der Mehrzahl von Primärbildern erhalten wurden.

2. Steuersystem nach Anspruch 1, wobei die Mehrzahl von synthetischen Bildern jeweilige grafische Erkennungsmarkierungen umfasst, die in Bezug auf die vorbestimmten grafischen Erkennungsmarkierungen (70, 72) oder in Bezug auf die Referenzoberfläche der Dosiereinheit (8) verändert werden.

3. Steuersystem nach Anspruch 2, wobei die veränderten grafischen Erkennungsmarkierungen morphologische, dimensionale, positionsbezogene oder optische Eigenschaften aufweisen, die in Bezug auf die vorbestimmten grafischen Erkennungsmarkierungen (70, 72) verändert werden.

4. Steuersystem nach Anspruch 3, wobei die veränderten grafischen Erkennungsmarkierungen mindestens eine der vorbestimmten grafischen Erkennungsmarkierungen umfassen, die verschoben, gedreht, in einem verkleinerten Maßstab oder in einem vergrößerten Maßstab, verzerrt, unvollständig, unscharf, mit veränderter Lichtintensität oder Helligkeit, mit veränderter Farbe oder mit verändertem Kontrast vorhanden sind.

5. Steuersystem nach einem der vorhergehenden Ansprüche, wobei die elektronischen Mittel (84) zur Verarbeitung und automatischen Erkennung der Dosiereinheit (8), vom Typ des maschinellen Lernens, ein faltendes neuronales Netzwerk umfassen, das dazu konfiguriert ist, als Eingabe einen Satz von Werten einer vorbestimmten Matrix von Pixeln des erfassten Bildes (I) zu empfangen, wobei das faltende neuronale Netzwerk eine Eingabeschicht, eine Mehrzahl von kaskadierten verborgenen Schichten und eine Ausgabeschicht umfasst, wobei die Mehrzahl von kaskadierten verborgenen Schichten eine erste Teilmenge (FE) von Merkmalsextraktionsschichten und eine zweite Teilmenge (CL) von Klassifikationsschichten umfasst.

6. Steuersystem nach Anspruch 5, wobei die Teilmenge (FE) von Merkmalsextraktionsschichten eine Mehrzahl von Schichten umfasst, von denen jede dazu konfiguriert ist, eine Mehrzahl von Merkmalskarten aus einem Bild (I) der Dosiereinheit (8) durch wiederholte Anwendung vorbestimmter Filter zu extrahieren, deren Werte in einem Lernschritt des neuronalen Netzwerks definiert werden, und die Datengröße der Merkmalskarten, die die Matrix von Pixeln des erfassten Bildes (I) darstellen, zu reduzieren.

7. Steuersystem nach Anspruch 6, wobei die Mehrzahl von Schichten der Teilmenge (FE) der verborgenen Merkmalsextraktionsschichten fünf Schichten umfasst, von denen jede ein Paar von faltenden Filtern enthält, die dazu bestimmt sind, auf eine Eingabepixelmatrix oder eine Eingabemerkmalskarte angewendet zu werden, sowie jeweilige ReLU-Aktivierungsfunktionen nach einer restlichen Konfiguration an dem Ausgang, wobei die faltenden Filter oder eine nachfolgende Pooling-Stufe dazu konfiguriert sind, die Größe der Eingabemerkmalskarte zu halbieren.

8. Steuersystem nach Anspruch 5, wobei die Teilmenge (CL) von Klassifikationsschichten zwei parallele Verarbeitungszweige (CL1, CL2) umfasst, jeder aufweisend eine Mehrzahl von vollständig verbundenen Schichten, von denen jede angepasst ist, als Eingabe ein Datenarray zu empfangen, das die Pixelwerte der Mehrzahl der Merkmalskarten umfasst, die aus der Teilmenge (FE) der Merkmalsextraktionsschichten ausgegeben werden.

9. Steuersystem nach Anspruch 8, wobei die Mehrzahl von vollständig verbundenen Schichten der Teilmenge (CL) der Klassifikationsschichten vier Schichten umfasst, von denen jede dazu konfiguriert ist, eine gewichtete lineare Kombination der Eingabewerte durchzuführen und eine entsprechende Aktivierungsfunktion, vorzugsweise eine nichtlineare Aktivierungsfunktion anzuwenden.

10. Steuersystem nach einem der Ansprüche 5 bis 9, wobei die elektronischen Mittel (84) zur Verarbeitung und automatischen Erkennung eingerichtet sind, mit einem Fernverwaltungssystem zu kommunizieren, das vorübergehend über eine lokale oder entfernte Verbindung mit dem Steuersystem verbunden ist, wobei die Verbindung eine kabelgebundene oder drahtlose Verbindung ist, um das Klassifikationsergebnis zu übertragen oder Programmieranweisungen der Parameter des neuronalen Netzwerks zu empfangen.

11. Steuersystem nach einem der vorhergehenden Ansprüche, umfassend Auslösemittel (80, 82), die mit den Bilderfassungsmitteln (62; 88) gekoppelt sind, die angepasst sind, das Einsetzen oder den Durchgang einer Dosiereinheit (8) in einen entsprechenden Erkennungssitz (60) zu erfassen und eingerichtet sind, die Erfassung des mindestens einen Bildes (I) der Dosiereinheit (8) oder eines ausgewählten Teils davon auszulösen, der sich in dem Erkennungssitz (60) befindet.

12. Steuersystem nach Anspruch 11, ferner umfassend Beleuchtungsmittel (86), die angepasst sind, einen Beleuchtungslichtstrahl auf den Erkennungssitz (60) zu richten.

13. Steuersystem nach Anspruch 12, wobei der Beleuchtungslichtstrahl in einem oder mehreren ausgewählten Wellenlängenbändern emittiert wird, die mindestens ein Wellenlängenband in dem sichtbaren, infraroten oder ultravioletten Spektrum umfassen.

14. Steuersystem nach Anspruch 13, umfassend Mittel zum Einstellen der Stärke und/oder der Wellenlänge des Beleuchtungslichtstrahls, die den Beleuchtungsmitteln (86) zugeordnet sind.

15. Steuersystem nach Anspruch 12, wobei die Beleuchtungsmittel (86) dazu konfiguriert sind, bei mindestens einem vorbestimmten veränderlichen Erfassungswinkel zu arbeiten.

16. Steuersystem nach einem der vorhergehenden Ansprüche, wobei die elektronischen Mittel (84) zur Verarbeitung und automatischen Erkennung der Dosiereinheit (8) eingerichtet sind, einen Prozess zum Korrigieren eines erfassten Bildes (I) zu implementieren, indem vorbestimmte Korrekturmodelle zum Korrigieren der erfassten Bilder nach den Anweisungen, die von einem Fernverwaltungssystem empfangen werden, das vorübergehend über eine lokale oder entfernte Verbindung mit dem Steuersystem verbunden ist, angewendet werden, wobei die Verbindung eine kabelgebundene oder drahtlose Verbindung ist.

17. Steuersystem nach einem der vorhergehenden Ansprüche, wobei die elektronischen Mittel (84) zur Verarbeitung und automatischen Erkennung der Dosiereinheit (8) eingerichtet sind, in dem mindestens einen erfassten Bild (I) die vordefinierten grafischen Erkennungsmarkierungen (70, 72) zu identifizieren und einen Vergleichsindex zu erzeugen, der das Niveau der Ähnlichkeit zwischen dem mindestens einen erfassten Bild und den Referenzbildern darstellt.

18. Steuersystem nach Anspruch 17, wobei das Niveau der Ähnlichkeit durch einen dynamisch veränderbaren Schwellenwert definiert wird.

19. Steuersystem nach einem der vorhergehenden Ansprüche, wobei der Parameter oder der Betriebsmodus zur Verwaltung der Dosiereinheit (8) mindestens einen Infusionsparameter oder einen Betriebsmodus umfassend mindestens eine von Temperatur, Druck und Menge einer Infusionsflüssigkeit umfasst.

20. Steuersystem nach einem der vorhergehenden Ansprüche, wobei der Parameter oder der Betriebsmodus zur Verwaltung der Dosiereinheit (8) mindestens einen Parameter oder einen Betriebsmodus umfasst, um die Kompression der Dosiereinheit (8) während eines Vorinfusionsschritts und/oder während eines Infusionsschritts zu steuern, Drücken der Dosiereinheit (8) nach der Infusion, um das Restwasser zu entfernen, oder eine automatische Entfernung der Dosiereinheit (8) nach der Infusion aus einer Infusionskammer (4) zu einem Sammelbehälter für verbrauchte Einheiten.

21. Steuersystem nach einem der vorhergehenden Ansprüche, wobei die grafischen Erkennungsmarkierungen (70, 72) mindestens eine der oberflächengrafischen Markierungen umfassen, die eine andere Farbe als die Farbe der Vorläufersubstanz der Dosiereinheit, sowie erhabene oder eingekerbte grafische Markierungen aufweisen.

22. Steuersystem nach einem der vorhergehenden Ansprüche, wobei die Bilderfassungsmittel (62; 88) dazu konfiguriert sind, in einem oder mehreren ausgewählten Wellenlängenbändern zu arbeiten, die mindestens ein Wellenlängenband in dem sichtbaren, infraroten oder ultravioletten Spektrum umfassen.

23. Steuersystem nach einem der vorhergehenden Ansprüche, wobei die Bilderfassungsmittel (62; 88) dazu konfiguriert sind, bei mindestens einem vorbestimmten veränderlichen Erfassungswinkel zu arbeiten.

24. Steuersystem nach einem der vorhergehenden Ansprüche, wobei die Bilderfassungsmittel (62; 88) dazu konfiguriert sind, Bildsequenzen (I) der Dosiereinheit (8) an verschiedenen räumlichen Positionen entlang eines Verschiebungswegs der Dosiereinheit (8) zu einer Infusionskammer (4) zu erfassen.

25. Steuerverfahren für eine Maschine (1) zur Zubereitung und Ausgabe von Heissgetränken durch kontrollierte Infusion einer Vorläufersubstanz in Granulat- oder Pulverform, die in einer Dosiereinheit (8) angeordnet ist, wobei die Maschine (1) ein Steuersystem nach einem der Ansprüche 1 bis 24 umfasst, das umfasst:

   - elektronische Mittel (84) zur Verarbeitung und automatischen Erkennung einer Dosiereinheit (8), vom Typ des maschinellen Lernens, die eingerichtet sind, als Eingabe mindestens ein Bild (I) der Dosiereinheit (8) oder eines ausgewählten Teils davon zu empfangen und die Dosiereinheit (8) in eine einer Mehrzahl von vorbestimmten Klassen von Dosiereinheiten zu klassifizieren; und
   - Steuermittel (64) zur Verwaltung der Dosiereinheit (8), die eingerichtet sind, mindestens einen Parameter oder einen Betriebsmodus zur Verwaltung der Dosiereinheit (8) zu steuern, wobei das Verfahren **dadurch gekennzeichnet ist, dass** es die folgenden Schritte umfasst:

      - in einem Lernschritt, Konfigurieren der elektronischen Mittel (84) zur Verarbeitung und automatischen Erkennung durch einen Satz von Trainingsbildern von Dosiereinheiten, umfassend mindestens eine Mehrzahl von Primärbildern von Dosiereinheiten, die jeweilige vorbestimmte grafische Erkennungsmarkierungen (70, 72) auf einer Referenzoberfläche der genannten Dosiereinheit (8) enthalten und entsprechende Klassen von Dosiereinheiten darstellen, sowie eine Mehrzahl von synthetischen Bildern, die durch Veränderung der Mehrzahl von Primärbildern erhalten wurden; und

      in einem Betriebsschritt,
      Erfassen mindestens eines Bildes (I) einer Dosiereinheit (8) der Vorläufersubstanz oder eines ausgewählten Teils davon, die in die Maschine (1) eingesetzt ist;
      Bereitstellen des mindestens eines erfassten Bildes (I) der Dosiereinheit (8) als Eingabe an die elektronischen Mittel (84) zur Verarbeitung und automatischen Erkennung;
Klassifizieren der Dosiereinheit (8) durch die elektronischen Mittel (84) zur Verarbeitung und automatischen Erkennung in eine einer Mehrzahl von vorbestimmten Klassen von Dosiereinheiten; und
mindestens einen Schritt zwischen:

- Steuern mindestens eines Parameters oder eines Betriebsmodus zur Verwaltung der Dosiereinheit (8) in Abhängigkeit von der Klasse der Dosiereinheit; und
- Aufzeichnen und/oder Übertragen an ein Fernverwaltungssystem eines Datenelements der Nutzung der Maschine (1), das die Klasse der Dosiereinheit (8) angibt, zu statistischen Überwachungszwecken.

26. Computerprogramm oder Gruppe von Programmen, die durch ein Steuersystem nach einem der Ansprüche 1 bis 24 ausgeführt werden können, umfassend ein oder mehrere Codemodule zur Implementierung eines Steuerverfahrens für eine Maschine (1) zur Zubereitung und Ausgabe von Heissgetränken durch kontrollierte Infusion einer Vorläufersubstanz in Granulat- oder Pulverform nach Anspruch 25.

**Revendications**

1. Système de commande pour une machine (1) de préparation et de distribution de boissons chaudes par infusion contrôlée d'une substance précurseur sous forme granulaire ou de poudre disposée dans une unité sous forme de dose (8), comprenant :

- des moyens d'acquisition d'image (62 ; 88) adaptés pour acquérir au moins une image (I) de ladite unité sous forme de dose (8), ou d'une partie sélectionnée de celle-ci, insérée dans la machine (1) ;
- des moyens électroniques (84) de traitement et de reconnaissance automatique de ladite unité sous forme de dose (8), du type apprentissage automatique, disposés pour recevoir en entrée ladite au moins une image acquise (I) de ladite unité sous forme de dose (8), et pour classer ladite unité sous forme de dose (8) dans l'une d'une pluralité de classes prédéterminées d'unités sous forme de dose sur la base d'un ensemble d'images d'apprentissage d'unités sous forme de dose prises dans une étape d'apprentissage ; et
- des moyens de commande de la machine (64) couplés auxdits moyens électroniques (84) de traitement et de reconnaissance automatique, disposés pour commander au moins un paramètre ou mode de fonctionnement pour la gestion de l'unité sous forme de dose (8) en fonction de la classe reconnue d'unité sous forme de dose ou pour enregistrer et transmettre à un système de gestion à distance une donnée d'utilisation de la machine (1) indicative de la classe reconnue d'unité sous forme de dose (8),

**caractérisé en ce que** ledit ensemble d'images d'apprentissage d'unités sous forme de dose comprend au moins une pluralité d'images primaires d'unités sous forme de dose (8) comprenant des marquages graphiques de reconnaissance prédéterminés respectifs (70, 72) sur une surface de référence de ladite unité sous forme de dose (8), indicatifs de classes correspondantes d'unités sous forme de dose, et une pluralité d'images synthétiques obtenues par altération de ladite pluralité d'images primaires.

2. Système de commande selon la revendication 1, dans lequel ladite pluralité d'images synthétiques comprend des marquages graphiques de reconnaissance respectifs altérés par rapport auxdits marquages graphiques de reconnaissance prédéterminés (70, 72) ou par rapport à la surface de référence de l'unité sous forme de dose (8).

3. Système de commande selon la revendication 2, dans lequel lesdits marquages graphiques de reconnaissance altérés présentent des propriétés morphologiques, dimensionnelles, positionnelles ou optiques altérées par rapport auxdits marquages graphiques de reconnaissance prédéterminés (70, 72).

4. Système de commande selon la revendication 3, dans lequel lesdits marquages graphiques de reconnaissance altérés comprennent au moins l'un desdits marquages graphiques de reconnaissance prédéterminés translaté, tourné, à échelle réduite ou à échelle agrandie, déformé, incomplet, flou, avec intensité lumineuse ou luminosité altérée, avec couleur altérée ou avec contraste altéré.

5. Système de commande selon l'une quelconque des revendications précédentes, dans lequel lesdits moyens électroniques (84) de traitement et de reconnaissance automatique de ladite unité sous forme de dose (8), du type apprentissage automatique, comprennent un réseau neuronal convolutionnel configuré pour recevoir en entrée un ensemble de valeurs d'une matrice prédéterminée de pixels de ladite image acquise (I), ledit réseau neuronal convolutionnel comprenant une couche d'entrée, une pluralité de couches cachées en cascade, et une couche de sortie, dans lequel ladite pluralité de couches cachées en cascade comprend un premier sous-ensemble (FE) de couches d'extraction de caractéristiques et un second sous-ensemble (CL) de couches de classification.

6. Système de commande selon la revendication 5, dans lequel ledit sous-ensemble (FE) de couches d'extraction de caractéristiques comprend une pluralité de couches, chacune desquelles est configurée pour extraire une pluralité de cartes de caractéristiques à partir d'une image (I) de l'unité sous forme de dose (8) par application répétée de filtres prédéterminés, dont les valeurs sont définies dans une étape d'apprentissage du réseau neuronal, et pour réduire la taille des données desdites cartes de caractéristiques représentatives de la matrice de pixels de l'image acquise (I).

7. Système de commande selon la revendication 6, dans lequel ladite pluralité de couches du sous-ensemble (FE) de couches cachées d'extraction de caractéristiques comprend cinq couches, chacune desquelles comprend une paire de filtres convolutionnels destinés à être appliqués à une matrice de pixels d'entrée ou à une carte de caractéristiques d'entrée, et des fonctions d'activation ReLU respectives selon une configuration résiduelle à la sortie, lesdits filtres convolutionnels ou une étape de regroupement (*pooling*) ultérieure étant configurés pour réduire de moitié la taille de la carte de caractéristiques d'entrée.

8. Système de commande selon la revendication 5, dans lequel ledit sous-ensemble (CL) de couches de classification comprend deux branches de traitement parallèles (CL1, CL2) chacune ayant une pluralité de couches entièrement connectées, chacune desquelles est adaptée pour recevoir en entrée un tableau de données comprenant les valeurs de pixels de la pluralité de cartes de caractéristiques en sortie du sous-ensemble (FE) de couches d'extraction de caractéristiques.

9. Système de commande selon la revendication 8, dans lequel ladite pluralité de couches entièrement connectées du sous-ensemble (CL) de couches de classification comprend quatre couches, chacune desquelles est configurée pour effectuer une combinaison linéaire pondérée des valeurs d'entrée et appliquer une fonction d'activation correspondante, de préférence une fonction d'activation non linéaire.

10. Système de commande selon l'une quelconque des revendications 5 à 9, dans lequel lesdits moyens électroniques (84) de traitement et de reconnaissance automatique sont disposés pour communiquer avec un système de gestion à distance temporairement connecté au système de commande via une connexion locale ou à distance, ladite connexion étant une connexion filaire ou sans fil, pour transmettre le résultat de classification ou pour recevoir des instructions de programmation des paramètres dudit réseau neuronal.

11. Système de commande selon l'une quelconque des revendications précédentes, comprenant des moyens de déclenchement (80, 82) couplés auxdits moyens d'acquisition d'image (62 ; 88), adaptés pour détecter l'insertion ou le passage d'une unité sous forme de dose (8) dans un siège de reconnaissance correspondant (60) et disposés pour déclencher l'acquisition de ladite au moins une image (I) de l'unité sous forme de dose (8) ou d'une partie sélectionnée de celle-ci située dans le siège de reconnaissance (60).

12. Système de commande selon la revendication 11, comprenant en outre des moyens d'éclairage (86) adaptés pour diriger un faisceau lumineux d'éclairage vers ledit siège de reconnaissance (60).

13. Système de commande selon la revendication 12, dans lequel ledit faisceau lumineux d'éclairage est émis dans une ou plusieurs bandes de longueur d'onde sélectionnées comprenant au moins une bande de longueur d'onde dans le spectre visible, infrarouge ou ultraviolet.

14. Système de commande selon la revendication 13, comprenant des moyens pour régler l'intensité et/ou la longueur d'onde dudit faisceau lumineux d'éclairage, associés auxdits moyens d'éclairage (86).

15. Système de commande selon la revendication 12, dans lequel lesdits moyens d'éclairage (86) sont configurés pour fonctionner à au moins un angle d'acquisition variable prédéterminé.

16. Système de commande selon l'une quelconque des revendications précédentes, dans lequel lesdits moyens électroniques (84) de traitement et de reconnaissance automatique de ladite unité sous forme de dose (8) sont disposés pour mettre en œuvre un processus de correction d'une image acquise (I) en appliquant des modèles de correction prédéterminés pour corriger les images acquises selon des instructions reçues d'un système de gestion à distance, temporairement connecté au système de commande via une connexion locale ou à distance, ladite connexion étant une connexion filaire ou sans fil.

17. Système de commande selon l'une quelconque des revendications précédentes, dans lequel lesdits moyens électroniques (84) de traitement et de reconnaissance automatique de ladite unité sous forme de dose (8) sont disposés pour identifier, dans ladite au moins une image acquise (I), lesdits marquages graphiques de reconnaissance prédéfinis (70, 72), et pour générer un indice de comparaison représentatif du degré de similarité entre ladite au moins une image acquise et lesdites images de référence.

18. Système de commande selon la revendication 17, dans lequel ledit degré de similarité est défini par un seuil modifiable dynamiquement.

19. Système de commande selon l'une quelconque des revendications précédentes, dans lequel ledit paramètre ou ledit mode de fonctionnement pour la gestion de l'unité sous forme de dose (8) comprend au moins un paramètre d'infusion ou mode de fonctionnement comprenant au moins l'un parmi la température, la pression et la quantité d'un liquide d'infusion.

20. Système de commande selon l'une quelconque des revendications précédentes, dans lequel ledit paramètre ou mode de fonctionnement pour la gestion de l'unité sous forme de dose (8) comprend au moins un paramètre ou mode de fonctionnement pour commander la compression de l'unité sous forme de dose (8) pendant une étape de préinfusion et/ou pendant une étape d'infusion, le pressage de l'unité sous forme de dose (8) après l'infusion pour éliminer l'eau résiduelle, ou l'évacuation automatique de l'unité sous forme de dose (8) après l'infusion, depuis une chambre d'infusion (4) vers un compartiment de collecte pour unités usagées.

21. Système de commande selon l'une quelconque des revendications précédentes, dans lequel lesdits marquages graphiques de reconnaissance (70, 72) comprennent au moins l'un parmi des marquages graphiques de surface, qui présentent une couleur différente de la couleur de la substance précurseur de l'unité sous forme de dose, et des marquages graphiques en relief ou entaillés.

22. Système de commande selon l'une quelconque des revendications précédentes, dans lequel lesdits moyens d'acquisition d'image (62 ; 88) sont configurés pour fonctionner dans une ou plusieurs bandes de longueur d'onde sélectionnées comprenant au moins une bande de longueur d'onde dans le spectre visible, infrarouge ou ultraviolet.

23. Système de commande selon l'une quelconque des revendications précédentes, dans lequel lesdits moyens d'acquisition d'image (62 ; 88) sont configurés pour fonctionner à au moins un angle d'acquisition variable prédéterminé.

24. Système de commande selon l'une quelconque des revendications précédentes, dans lequel lesdits moyens d'acquisition d'image (62 ; 88) sont configurés pour acquérir des séquences d'images (I) de l'unité sous forme de dose (8) à différentes positions spatiales le long d'un trajet de transfert de l'unité sous forme de dose (8) vers une chambre d'infusion (4).

25. Procédé de commande pour une machine (1) de préparation et de distribution de boissons chaudes par infusion contrôlée d'une substance précurseur sous forme granulaire ou de poudre disposée dans une unité sous forme de dose (8), dans lequel ladite machine (1) comprend un système de commande selon l'une quelconque des revendications 1 à 24 qui comprend :

des moyens électroniques (84) de traitement et de reconnaissance automatique d'une unité sous forme de dose (8), du type apprentissage automatique, disposés pour recevoir en entrée au moins une image (I) de ladite unité sous forme de dose (8) ou d'une partie sélectionnée de celle-ci, et pour classer ladite unité sous forme de dose (8) dans l'une d'une pluralité de classes prédéterminées d'unités sous forme de dose ; et
des moyens de commande (64) pour la gestion de l'unité sous forme de dose (8), disposés pour commander au moins un paramètre ou mode de fonctionnement pour la gestion de l'unité sous forme de dose (8),
le procédé étant **caractérisé en ce qu'**il comprend les étapes de :

- dans une étape d'apprentissage, configurer lesdits moyens électroniques (84) de traitement et de reconnaissance automatique par un ensemble d'images d'apprentissage d'unités sous forme de dose, comprenant au moins une pluralité d'images primaires d'unités sous forme de dose comprenant des marquages graphiques de reconnaissance prédéterminés respectifs (70, 72) sur une surface de référence de ladite unité sous forme de dose (8) et représentatifs de classes correspondantes d'unités sous forme de dose, et une pluralité d'images synthétiques obtenues par altération de ladite pluralité d'images primaires ; et
- dans une étape de fonctionnement,

acquérir au moins une image (I) d'une unité sous forme de dose (8) de ladite substance précurseur, ou d'une partie sélectionnée de celle-ci, insérée dans la machine (1) ;
fournir ladite au moins une image acquise (I) de ladite unité sous forme de dose (8) en entrée auxdits moyens électroniques (84) de traitement et de reconnaissance automatique ;
classer ladite unité sous forme de dose (8) dans l'une d'une pluralité de classes prédéterminées d'unités sous forme de dose par lesdits moyens électroniques (84) de traitement et de reconnaissance automatique ; et
au moins une étape parmi :

- commander au moins un paramètre ou mode de fonctionnement pour la gestion de l'unité sous forme de dose (8) en fonction de la classe de ladite unité sous forme de dose ; et
- enregistrer et/ou transmettre à un système de gestion à distance une donnée d'utilisation de la machine (1) indicative de la classe de l'unité sous forme de dose (8) à des fins de surveillance statistique.

26. Programme informatique ou groupe de programmes exécutables par un système de commande selon l'une quelconque des revendications 1 à 24, comprenant un ou plusieurs modules de code pour mettre en œuvre un procédé de commande pour une machine (1) de préparation et de distribution de boissons chaudes par infusion contrôlée d'une substance précurseur sous forme granulaire ou de poudre selon la revendication 25.

FIG. 1

FIG. 2a    FIG. 2b    FIG. 2c

FIG. 4

EP 4 558 019 B1

FIG. 3

FIG. 5

FIG.6

FIG. 7

FIG. 8a

FIG. 8b

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- IT 274555

- WO 2019154527 A